# EUROPÄISCHE PATENTSCHRIFT

(11) **EP 1 660 802 B1**
(45) Veröffentlichungstag und Bekanntmachung des Hinweises auf die Patenterteilung: **05.11.2008**
(21) Anmeldenummer: 04786903.7
(22) Anmeldetag: 01.09.2004
(51) Int. Cl.: F16L 3/23

(54) **KLEMME ZUM HALTEN VON FLACHEN GEGENSTÄNDEN**
CLIP FOR RETAINING FLAT ITEMS
PINCE CONCUE POUR MAINTENIR DES OBJETS PLANS

(30) Priorität: 01.09.2003 DE 10340571
(43) Veröffentlichungstag der Anmeldung: 31.05.2006
(73) Patentinhaber: Newfrey LLC, Newark, Delaware 19711 (US)
(72) Erfinder: ROSEMANN, Frank, 35516 Münzenberg (DE); HAHN, Ernst, Ludwig, 35446 Rabenau (DE); SENG, Hans, Peter, 35447 Reiskirchen (DE)
(74) Vertreter: Haar, Lucas Heinz Jörn
(86) Internationale Anmeldenummer: PCT/EP2004/009718
(87) Internationale Veröffentlichungsnummer: WO 2005/022019

(56) Entgegenhaltungen:
- DE-A- 10 129 833
- FR-A- 1 278 958
- US-A- 5 020 749
- US-A- 5 367 750

## Beschreibung

Die Erfindung betrifft eine Klemme zum Halten von flachen Gegenständen, wie Folien, Flachbandleitungen oder dergleichen, versehen mit einem Unterteil, das einen Boden aufweist, und mit einem an dem Unterteil angebrachten, dem Boden gegenüberliegenden Oberteil, wobei zwischen dem Unterteil und dem Oberteil ein Haltebereiche mit einer Einführöffnung vorgesehen ist.

Klemmen der angegebenen Art werden beispielsweise in Automobilen verwendet, um dort mit elektrischen Leitern beschichtete Folien oder Flachbandleitungen zu befestigen, die zum Verbinden elektrischer Einrichtungen vorgesehen sind. Hierbei besteht das Problem, daß an einigen Befestigungsstellen nur eine einzige Folie oder ein einziges Flachbandkabel mit einer Klemme zu halten ist, während an einigen anderen Befestigungsstellen mehrere Folien und Flachbandkabel zusammenkommen, die ebenfalls möglichst mit einer Klemme gehalten werden sollen. Ein weiteres Problem besteht darin, die Montage der Leitungen möglichst einfach zu gestalten, wobei es zum einen erforderlich ist, Klemmen und Folien bzw. Leitungen vorzumontieren um dann diese vormontierten Einheiten an den dafür vorgesehenen Unterlagen zu befestigen, es zum anderen aber auch möglich sein soll, in die vormontierten und bereits eingebauten Klemmen noch weitere Folien oder Leitungen einzubringen, ohne die Fixierung der bereits vorhandenen Folien oder Leitungen zu beeinträchtigen. Weiterhin soll nach Beendigung der Montage eine sichere Fixierung der Folien oder Leitungen in den Klemmen gegeben sein.

Aus DE 101 29 833 A1 ist eine Klemme zum Halten eines Flachbandkabels bekannt, die ein U-förmiges Basisteil zum Aufnehmen des Flachbandkabels, ein mit dem Basisteil verbundenes Abdeckteil, einen sich von dem Basisteil erstreckenden Vorsprung und ein Andrückteil umfaßt, das an dem Abdeckteil angeordnet ist und das von dem Basisteil aufgenommene Flachbandkabel nach unten hält, wenn das Abdeckteil geschlossen ist. In dem Flachbandkabel befindet sich hierbei ein Schlitz, in den der Vorsprung des Basisteiles eindringt. Zur Befestigung der Klemme ist auf der Unterseite des Basisteils ein Clip vorgesehen, der in ein Loch einer Automobilkarosserie einsteckbar ist. Diese bekannte Klemme eignet sich nicht zur Vor- und Nachmontage, da sie nach jedem Montagevorgang jeweils vollständig geschlossen werden muß, damit das oder die eingelegten Flachbandkabel ausreichend gehalten werden.

Es ist weiterhin aus DE 100 35 452 A1 eine Haltevorrichtung zur Befestigung von Leiterfolien bekannt, die aus einer an der vorgesehenen Stelle im Automobil angebrachten Grundplatte und einem in die Grundplatte einsetzbaren Fixierknopf besteht, der eine runde Basis und einen der Basis diagonal gegenüberliegenden Arm aufweist, der auf seiner der Basis zugekehrten Unterseite Drucknocken zur Auflage auf der Leiterfolie hat. Hierbei kann nach dem Anbringen der Haltevorrichtung an einem Automobil die mit einem Langloch oder mehreren versehene Leiterfolie zwischen Basis und Arm eingeschoben werden, wobei ein an dem Arm angebrachter Finger in ein Langloch eindringt und die Leiterfolie gegen Herausziehen sichert. Mit dieser Haltevorrichtung können nur gelochte Leiterfolien befestigt werden.

DE 88 05 815 U1 zeigt eine Klemme zum Halten von Kabeln, welche ein Unterteil mit Befestigungselement, ein dem Unterteil gegenüber liegendes Oberteil mit federnden Andrückelementen, eine seitliche Öffnung zum Einlegen der Kabel und einen die Öffnung verschließenden Deckel mit Rastverschluß aufweist.

Eine Klemme mit den Merkmalen des Oberbegriffs des Patentanspruchs 1 ist aus US-A-5 020 749 bekannt. Diese Klemme ist dazu eingerichtet, Rohre oder Kabel mit verschiedenen Durchmessern zu halten und weist ein über die Einführöffnung spannbares Band auf, dessen Ende an verschiedenen Stellen in ein Sägezahnprofil auf der Außenseite des Klemmenoberteils einrastbar ist. Das Klemmenunterteil und das Band haben auf ihrer Innenseite federnde Arme, welche zum Halten der Rohre oder Kabel in der Lagerzone beitragen.

Der Erfindung liegt die Aufgabe zugrunde, eine Klemme der eingangs genannten Art zu schaffen, die einen einfachen Montagevorgang ermöglicht, zur Aufnahme einer oder mehrerer Folien oder Flachbandleitungen geeignet ist und keine Befestigungslöcher oder Ausnehmungen in den Folien oder Flachbandleitungen benötigt.

Diese Aufgabe wird durch die in Patentanspruch 1 angegebene Erfindung gelöst. Vorteilhafte Ausgestaltungen der Erfindung sind in den Unteransprüchen angegeben.

Nach der Erfindung weist die Klemme einen Boden und im Abstand voneinander angeordnete, von dem Boden abstehende Anschläge auf, die einen Haltebereich seitlichen begrenzen, und Oberteil, wobei zwischen dem an dem Unterteil angebrachten, dem Boden gegenüberliegenden Oberteil und dem auf einer Seite des Haltebereiches angeordneten Anschlag ist eine Einführöffnung vorgesehen, die durch einen in der Schließstellung das Oberteil übergreifenden und durch einen Verschluß mit dem Unterteil verbindbaren Deckel verschließbar ist, wobei der Deckel der erfindungsgemäßen Klemme ein Druckelement aufweist, das bei geschlossenem Deckel eine gegen den Boden des Unterteils gerichtete Klemmkraft erzeugt und wobei in dem Oberteil eine Öffnung vorgesehen ist, durch die sich der Finger bei geschlossenem Deckel hindurch in Richtung des Bodens des Unterteiles erstreckt. Das Druckelement kann aus einem an der Unterseite des Deckels angebrachten, elastisch verformbaren Finger bestehen.

In die erfindungsgemäß gestaltete Klemme können bei geöffnetem Deckel durch die dann freie Einführungsöffnung nacheinander mehrere Folien oder Flachbandleitungen eingebracht werden, wobei diese zwischen Oberteil und Unterteil und durch die seitlichen Anschläge für die Durchführung von Montagevorgängen ausreichend sicher gehalten werden. Sind alle zu haltenden Folien oder Flachbandleitungen in die Klemme eingelegt, so wird der Deckel geschlossen und dadurch die endgültige Fixierung der Folien oder Flachbandleitungen in der Klemme bewirkt. Auf diese Weise werden eingangs genannten Probleme gelöst.

Die erfindungsgemäße Klemme hat den Vorteil, daß während der Montage bei geöffnetem Deckel zum Festhalten der Folien oder Flachbandleitungen eine niedrige Klemmkraft vorgesehen werden kann und daß in Verbindung mit dem Schließen des Deckel zum dauerhaften Festhalten der Folien oder Flachbandleitungen die Klemmkraft auf das gewünschte Maß erhöht werden kann. Zusätzliche Haltemittel, wie Dorne, die in Löcher in den Folien oder Flachbandleitungen eingreifen, sind daher entbehrlich.

Wenn der Deckel geöffnet ist, erzeugt die Klemmkraft zum Festhalten der Folien oder Flachbandleitungen vorzugsweise ein in dem Haltebereich zwischen Boden und Oberteil sich erstreckendes federndes Andrückelement, das an dem Oberteil oder dem Unterteil angebracht ist. Weiterhin kann vorgesehen sein, daß bei geschlossenem Deckel das an diesem angeordnete Druckelement auf das Andrückelement einwirkt, so daß das Andrückelement die Klemmkraft des Druckelementes auf die Folien oder Flachbandleitungen überträgt.

Nach einem weiteren Vorschlag der Erfindung ist an dem Unterteil ein Befestigungselement angebracht, das zur Befestigung der Klemme an einer Unterlage dient. Als Befestigungselemente kommen in Öffnungen einsteckbare Zapfen, auf Bolzen oder Zapfen aufsteckbare Hülsen, Ösen oder Ringe, sowie Klammern, Schrauben oder Muttern in Betracht.

Die erfindungsgemäße Klemme ist vorzugsweise einstückig aus einem Kunststoffmaterial herstellbar, wobei der Deckel durch ein Biegescharnier mit dem Unterteil verbunden ist. Zum Halten des Deckels in der Schließstellung eignet sich besonders ein Schnappverschluß mit einem am Deckel angebrachten Rasthaken, der in eine Ausnehmung im Unterteil einschnappt.

In einer weiteren vorteilhaften Ausgestaltung der Erfindung hat die Klemme eine sich zwischen dem Unterteil und dem Oberteil erstreckende Zwischenplatte, die einen unteren, zwischen dem Unterteil und der Zwischenplatte befindlichen Haltebereich und einen oberen, zwischen dem Oberteil und der Zwischenplatte befindlichen Haltebereich voneinander trennt. Hierdurch können mehrere Folien oder Flachbandleitungen getrennt voneinander und auf unterschiedliche Weise gehalten werden. So kann beispielsweise der obere Haltebereich zur Aufnahme von Folien mit Befestigungsausnehmungen dienen. Hierzu weist die Zwischenplatte vorzugsweise eine Öffnung auf, die mit der Öffnung in dem Oberteil fluchtet und das an dem Deckel angeordnete Druckelement ragt bei geschlossenem Deckel durch die Öffnung im Oberteil hindurch und dringt in die Öffnung in der Zwischenplatte ein.

Weiterhin kann vorgesehen sein, daß das Druckelement einen die Öffnung in der Zwischenplatte durchdringenden Abschnitt hat, der bei geschlossenem Deckel an dem Boden des Unterteils anliegt, um dadurch die auf dem Unterteil angeordnete Folie festzuklemmen. Außerdem kann das Druckelement einen Abschnitt haben, der bei geschlossenem Deckel auf der Zwischenplatte aufliegt und die Folie im oberen Haltebereich festklemmt.

Das Druckelement kann erfindungsgemäß aus einem bogenförmigen, einstückig mit dem Deckel ausgebildeten Materialstreifen bestehen, der elastisch nachgiebig ist und dadurch für eine dauerhafte Klemmung sorgt. Alternativ hierzu kann das Druckelement aus einem Körper aus elastomerem Werkstoff bestehen, der form- oder materialschlüssig mit dem Deckel verbunden ist.

Die Erfindung wird nachfolgend anhand eines Ausführungsbeispiels näher erläutert, das in der Zeichnung dargestellt ist. Es zeigen
- Figur 1: eine Seitenansicht einer Klemme nach der Erfindung in Offenstellung,
- Figur 2: eine Ansicht der Klemme gemäß Figur 1 von oben,
- Figur 3: eine perspektivische Darstellung der geschlossenen Klemme mit einer in der Klemme gehaltenen Folie,
- Figur 4: eine Seitenansicht der geschlossenen Klemme,
- Figur 5: eine Seitenansicht einer zweiten Ausführung einer erfindungsgemäßen Klemme in Offenstellung,
- Figur 6: eine Ansicht der Klemmer gemäß Figur 5 von oben,
- Figur 7: eine perspektivische Darstellung der geschlossenen Klemme gemäß Figur 4 mit in der Klemme gehaltenen Folien und
- Figur 8: eine Seitenansicht der geschlossenen Klemme gemäß Figur 4.

Die dargestellte Klemme 1 weist ein plattenförmiges Unterteil 2, in einem parallelen Abstand von diesem ein plattenförmiges Oberteil 3, einen streifenförmigen Deckel 4 und ein Befestigungselement 5 auf, das mit dem Unterteil 2 verbunden ist. Die Klemme 1 ist einstückig aus einem Kunststoffmaterial hergestellt. Hiervon abweichend ist es jedoch auch möglich, das Befestigungselement 5 als separates Teil herzustellen und dann durch geeignete Mittel mit dem Unterteil 2 zu verbinden.

Auf der dem Oberteil 3 zugekehrten Boden des Unterteils 2 sind an diesem leistenförmige Anschläge 6, 7 ausgebildet, die sich in einem parallelen Abstand voneinander befinden und zur seitlichen Begrenzung der Lage der auf dem Unterteil 2 gehaltenen Gegenstände wie Folien, Flachbandleitungen oder dergleichen dienen. Die oberen Enden der Anschläge 6, 7 sind mit hakenförmig zueinander gerichteten Abbiegungen versehen. Das dem Anschlag 6 benachbarte seitliche Ende des Unterteils 2 weist in seiner Mitte eine Ausnehmung 8 auf, in die das Befestigungsende des Deckels eingreift. Die Ausnehmung 8 ist auf ihrer Unterseite mit einem Hinterschnitt 9 versehen.

Das dem Anschlag 7 benachbarte seitliche Ende des Unterteils 2 geht über einen halbzylindrischen Wandabschnitt 10 in das Oberteil 3 über. An den Wandabschnitt 10 ist außerdem in Verlängerung des Unterteils 2 ein Biegescharnier 11 in Form eines elastisch verformbaren Materialstreifens geringerer Dicke angeformt, durch welches der Deckel 4 gehalten ist.

Das Oberteil 3 erstreckt sich in einem Abstand von den Anschlägen 6, 7 und ist an seinem freien Ende mit Abbiegungen 12 versehen, die mit dem Oberteil 3 einen Winkel von etwa 160° bilden. Zwischen den Abbiegungen 12 endet das Oberteil 3 über dem Anschlag 6, wodurch eine seitliche, von den Abbiegungen 12 begrenzte Ausnehmung 13 zur Aufnahme des Deckels 4 gebildet ist. Die Abbiegungen 12 dienen dazu, das Einführen von Folien oder Flachbandleitungen in die zwischen dem Oberteil 3 und dem Anschlag 6 vorhandene Einführöffnung 14 zu erleichtern.

An der Unterseite des Oberteiles 3 ist mit Hilfe eines in der Ebene der Abbiegungen 12 liegenden Verbindungsabschnittes 15 ein sich zwischen dem Oberteil 3 und dem Unterteil 2 erstreckendes, federndes Andrückelement 16 angebracht, welches die Folien oder Flachbandleitungen beim Einbringen in die Klemme 1 mit einer Führungsfläche in Richtung auf den Anschlag 7 führt und an den Boden des Unterteiles 2 andrückt. Über dem freien Endbereich des Andrückelementes 16 befindet sich in dem Oberteil 3 eine rechteckige Öffnung 17 zur Aufnahme eines an dem Deckel 4 angeordneten Druckelementes 18.

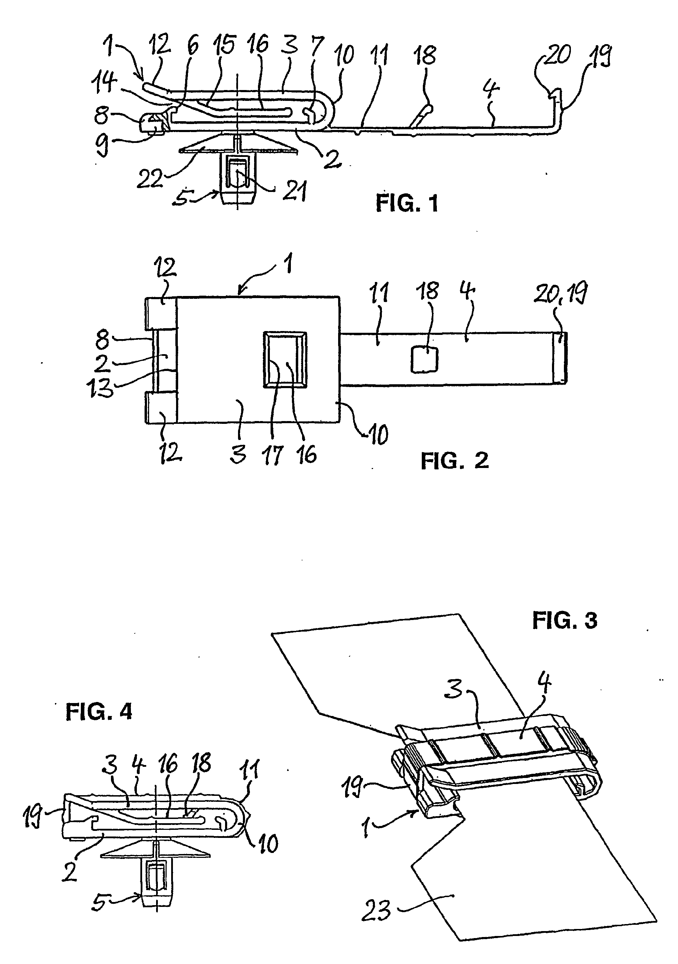

Der Deckel 4 befindet sich im Neuzustand der Klemme 1 in der in Figur 1 gezeigten Lage, in der er sich etwa in der gleichen Ebene erstreckt wie das Unterteil 2. In der Nähe seines Befestigungsendes ist an dem Deckel 4 das Druckelement 18 in Form eines sich in einem Winkel von etwa 50° zum Deckel nach oben erstreckenden Fingers angebracht. Das freie Ende des Deckels 4 ist mit einer rechtwinklig abgebogenen Befestigungslasche 19 versehen, die an ihrem Ende einen in den Hinterschnitt 9 der Ausnehmung 13 einschnappenden Rasthaken 20 trägt.

Das Befestigungselement 5 besteht bei dem dargestellten Ausführungsbeispiel aus einem zapfenförmigen Clip, der in ein Loch in einer Blechwand einsteckbar und mit Hilfe von Sperrfingern 21 in dem Loch festhaltbar ist. Ein tellerförmiger Flansch 22 bildet eine Anlagefläche für das Blech und sorgt für eine definierte Ausrichtung der Klemme 1 zur Oberfläche des Bleches. Der Flansch 22 ist in axialer Richtung elastisch verformbar, wodurch eine spielfreie Klemmung des Befestigungselementes 5 an dem Blech erreicht wird und Maßtoleranzen ausgeglichen werden können.

In den Figuren 3 und 4 ist die Klemme 1 in geschlossenem Zustand gezeigt, wobei in Figur 3 eine Folie 23 von der Klemme 1 gehalten wird. In geschlossenem Zustand der Klemme 1 umgreift der Deckel 4 das Oberteil 3; die Lasche 19 greift in die Ausnehmung 8 ein und der in den Hinterschnitt einschnappende Rasthaken 20 hält den Deckel 4 in dieser Lage fest. Das Druckelement 18 erstreckt sich in der Schließstellung durch die Öffnung 17 im Oberteil 3 und drückt mit seinem Ende auf das Andrückelement 16, wodurch dieses zusätzlich in Richtung des Bodens des Unterteiles 2 belastet wird und die auf dem Boden des Unterteils 2 aufliegende Folie oder Flachbandleitung oder auch mehrere derselben festgeklemmt werden. Vor dem Schließen des Deckels 4 bewirkt allein das Andrückelement 16 mit seiner geringeren Federsteifigkeit das Festhalten der eingeführten Folien oder Flachbandleitungen, wobei die Andrückkraft so ausgelegt ist, daß das Montieren auf mehrere Folien nacheinander ohne Schwierigkeit möglich ist. Die Haltekraft des Andrückelementes ist andererseits bereits groß genug, um die Klemme auf einem Folien- oder Flachbandleiterband vormontieren zu können, um anschließend das Band mit vormontierter Klemme an der vorgesehenen Unterlage zu montieren. Nach der Montage der Klemme an der Unterlage können weitere Folien oder Flachbandleitungen in die Klemme eingelegt werden. Erst danach erfolgt durch Schließen des Deckels die endgültige Klemmung und Lagesicherung der eingelegten Folien oder Flachbandleitungen.

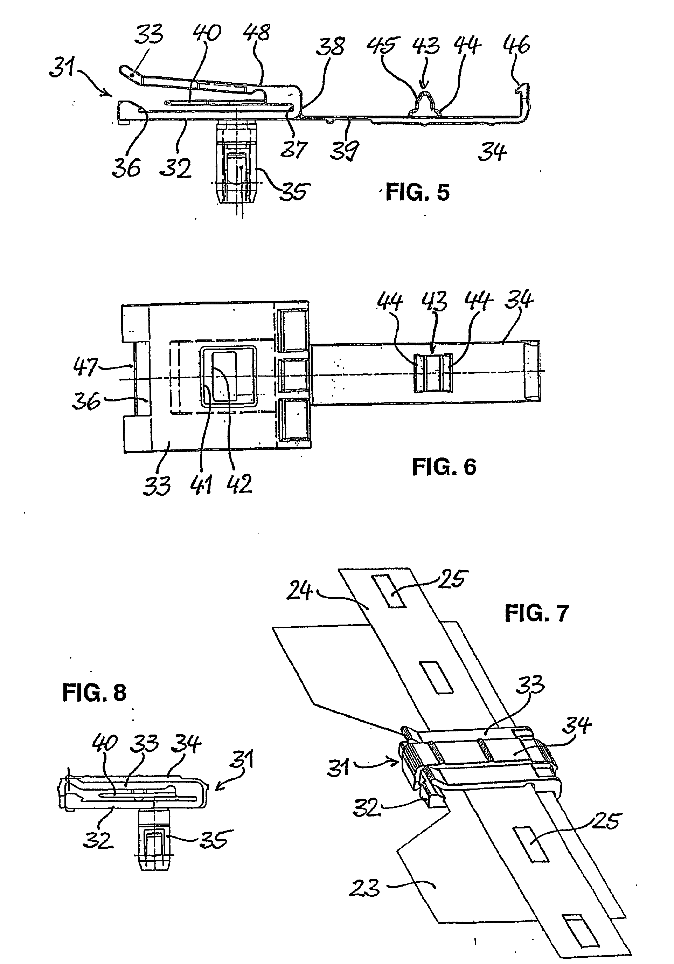

In den Figuren 5 bis 8 ist eine Ausführung einer Klemme 31 gezeigt, die zur Aufnahme und Befestigung zweier unterschiedlicher Folientypen geeignet ist. Die Klemme 31 ist in ihrem grundsätzlichen Aufbau der Klemme 1 sehr ähnlich. Sie weist wie diese ein Unterteil 32, ein Oberteil 33, einen Deckel 34 und ein Befestigungselement 35 auf. An den Schmalseiten des Unterteils 32 sind einander gegenüberliegend und sich in Richtung des Oberteiles 33 erstreckend Anschläge 36, 37 vorgesehen, zwischen denen auf dem Unterteil 32 eine Folie, Flachbandleitung oder dergleichen angeordnet werden kann. Der Anschlag 37 wird von einem das Unterteil 32 mit dem Oberteil 33 verbindenden Wandabschnitt 38 gebildet. Auf der Außenseite des Wandabschnittes 38 ist der Deckel 34 mit Hilfe eines Biegescharniers 39 befestigt. Zwischen dem Oberteil 33 und dem Anschlag 36 ist die Einfuhröffnung 14 angeordnet.

Zwischen dem Unterteil 32 und dem Oberteil 33 erstreckt sich im wesentlichen parallel zu diesen eine Zwischenplatte 40, die nahe dem Wandabschnitt 38 mit ihrem einen Ende an dem Oberteil 33 befestigt ist. Die Zwischenplatte 40 weist in ihrer Mitte eine rechteckige Öffnung 41 auf. Über der Öffnung 41 befindet sich in dem Oberteil 33 eine rechteckige Öffnung 42, deren Länge im wesentlichen der Länge der Öffnung 41 entspricht, deren Breite jedoch größer ist als die Breite der Öffnung 41. Die Öffnung 42 ist außerdem relativ zur Öffnung 41 so angeordnet, daß von oben gesehen die Längsseiten der Öffnung 41 in einem Abstand von den Längsseiten der Öffnung 42 innerhalb der Öffnung 42 liegen. Die Zwischenplatte 40 endet in einem Abstand von dem Anschlag 36, wodurch eine Öffnung für den Zugang zum unteren Haltebereich der Klemme 31 gebildet ist.

An der Unterseite des Deckels 34 ist ein Druckelement 43 angebracht, welches aus einem rechteckigen Materialstreifen besteht, dessen schmale Endkanten in einem Abstand voneinander an den Deckel 34 derart angeformt sind, daß der Materialstreifen nach Art eines Bogens den zwischen seinen schmalen Endkanten sich erstreckenden Deckelabschnitt überspannt. In dem Materialstreifen sind einander gegenüberliegend zur Bogenmitte hin gerichtete Einknickungen vorgesehen, die dem Druckelement 43 eine Stufenform mit einem den Deckel 34 benachbarten breiteren Abschnitt 44 und einem schmäleren Abschnitt 45 geben. Das Druckelement 43 ist so an dem Deckel 34 angeordnet, daß es beim Schließen des Deckels 34 durch die Öffnung 42 im Oberteil 33 in den Zwischenraum zwischen dem Oberteil 33 und dem Unterteil 32 eingreift, wobei es mit dem schmäleren Abschnitt 45 die Öffnung 41 in der Zwischenplatte 40 durchdringt und an dem Boden des Unterteils 32 zur Anlage kommt. Mit dem breiteren Abschnitt 44 legt sich das Druckelement 43 beiderseits der Öffnung 41 an dem Rand der Zwischenplatte 40 an. Das Druckelement 43 ist elastisch verformbar, und seine Länge ist so groß bemessen, daß es beim Schließen des Deckels 34 etwas zusammengedrückt wird und dementsprechend bei geschlossenem Deckel mit einer Federkraft an dem Unterteil 32 bzw. der Zwischenplatte 40 oder an den auf diesen angeordneten Folien oder Flachbandleitungen anliegt.

Der Deckel 34 wird in der Schließstellung wie bei dem vorherigen Ausführungsbeispiel durch einen Rasthaken 46 gehalten, der in eine hinterschnittene Ausnehmung 47 im Unterteil 32 eingreift.

Das freie Ende des Zwischenplatte 40 befindet sich in einem Abstand von dem Anschlag 36, um das Einführen von Folien in den unteren Aufnahmebereich zwischen Zwischenplatte 40 und Unterteil 32 zu erleichtern. Das Einführen der Folien in den oberen, zwischen der Zwischenplatte 40 und dem Oberteil 34 befindlichen Aufnahmebereich wird durch eine in einem Winkel von etwa 5° zur Ebene der Zwischenplatte 40 geneigte Anordnung des Oberteils 33 erleichtert, welche das Oberteil 33 bei geöffnetem Deckel 34 einnimmt. Beim Schließen des Deckels 34 wird das Oberteil 33 wie aus Figur 8 zu ersehen in eine zur Zwischenplatte 40 und zum Unterteil 32 parallele Lage gebracht. Ermöglicht wird dies durch eine am Befestigungsende des Oberteils 33 ausgebildete, die Biegung erleichternde Querschnittsverringerung 48.

Wie aus Figur 7 zu ersehen, können mit der Klemme 31 Folien oder Flachbandleitungen ohne Ausnehmungen oder Befestigungslöcher und solche mit Ausnehmungen oder Befestigungslöchern gehalten werden. In dem unteren Aufnahmebereich zwischen dem Unterteil 32 und der Zwischenplatte ist eine Folie 23 gehalten, die keine Ausnehmungen hat. Die Folie 23 ist an den Anschlägen 36, 37 quer zu ihrer Längserstreckung formschlüssig abgestützt und wird mit Hilfe des Druckelementes 43 an das Unterteil 32 angedrückt und dadurch festgeklemmt. In gleicher Weise können in dem unteren Haltebereich auch mehrere Folien geringer Dicke gehalten werden. Der obere Haltebereich zwischen der Zwischenplatte 40 und dem Oberteil 33 ist zur Befestigung gelochter Folien 24 oder Flachbandleitungen bestimmt. Diese werden im oberen Haltebereich so angeordnet, daß beim Schließen des Deckels der Abschnitt 45 des Druckelementes 43 eines der Löcher 25 durchdringt und dadurch die Folie formschlüssig in der Klemme fixiert. Zudem wird die Folie 24 an zwei gegenüberliegenden Rändern des Loches 41 zwischen dem Abschnitt 44 des Druckelementes 43 und der Zwischenplatte 40 festgeklemmt, so daß sie gegen Verrutschen gesichert ist. Auch im oberen Haltebereich können mehrere gelochte Folien aufgenommen werden.

## Patentansprüche

1. Klemme zum Halten von flachen Gegenständen, wie Folien, Flachbandleitungen oder dergleichen, versehen mit einem Unterteil (2, 32), das einen Boden und im Abstand voneinander angeordnete, von dem Boden abstehende Anschläge (6, 7, 36, 37) aufweist, die einen Haltebereich seitlich begrenzen, und mit einem an dem Unterteil angebrachten, dem Boden gegenüberliegenden Oberteil (3, 33), wobei zwischen dem Oberteil und dem auf einer Seite des Haltebereiches angeordneten Anschlag (6, 36) eine Einführöffnung (14) vorgesehen ist, wobei die Einführöffnung durch einen in der Schließstellung das Oberteil (3, 33) übergreifenden Deckel (4, 34) verschließbar ist, **dadurch gekennzeichnet, daß** der Deckel (4, 34) durch einen Verschluß mit dem Unterteil (2, 32) verbindbar ist und ein Druckelement (18, 43) aufweist, das bei geschlossenem Deckel eine gegen den Boden des Unterteils (2) gerichtete Klemmkraft erzeugt und daß in dem Oberteil (3, 33) eine Öffnung (17, 41) vorgesehen ist, durch die sich das Druckelement (18, 43) bei geschlossenem Deckel (4, 34) hindurch in Richtung des Bodens des Unterteils (2, 32) erstreckt.

2. Klemme nach Anspruch 1, **dadurch gekennzeichnet, daß** das Druckelement (18) aus einem an der Innenseite des Deckels (4) angebrachten, elastisch verformbaren Finger besteht.

3. Klemme nach einem der vorhergehenden Ansprüche, **gekennzeichnet durch** ein sich in dem Haltebereich zwischen dem Boden des Unterteils (2) und dem Oberteil (3) erstreckendes, federndes Andrückelement (16).

4. Klemme nach Anspruch 3, **dadurch gekennzeichnet, daß** das Andrückelement (16) an dem Oberteil (3) angebracht ist.

5. Klemme nach einem der Ansprüche 3 oder 4, **dadurch gekennzeichnet, daß** das Andrückelement (16) eine Führungsfläche aufweist, durch welche die Gegenstände beim Einbringen in die Klemme in den Haltebereich geführt werden.

6. Klemme nach einem der vorhergehenden Ansprüche, **dadurch gekennzeichnet, daß** das Druckelement (18) bei geschlossenem Deckel (4) auf das Andrückelement (16) einwirkt.

7. Klemme nach einem der vorhergehenden Ansprüche, **dadurch gekennzeichnet, daß** an dem Unterteil (2, 32) ein Befestigungselement (5, 35) angebracht ist.

8. Klemme nach einem der vorhergehenden Ansprüche, **dadurch gekennzeichnet, daß** der Deckel (4, 34) durch ein Blegescharnier (11, 39) mit dem Unterteil (2, 32) verbunden ist.

9. Klemme nach einem der vorhergehenden Ansprüche, **dadurch gekennzeichnet, daß** zum Halten des Deckels (4, 34) in der Schließstellung ein Schnappverschluß mit einem an dem Deckel angebrachten Rasthaken (20, 46) vorgesehen ist, der in eine Ausnehmung (8, 47) im Unterteil (2, 32) einschnappt.

10. Klemme nach einem der vorhergehenden Ansprüche, **dadurch gekennzeichnet, daß** sie einstückig aus einem Kunststoffmaterial hergestellt ist.

11. Klemme nach einem der Ansprüche 1 oder 7 bis 10, **gekennzeichnet durch** eine sich zwischen dem Unterteil (32) und dem Oberteil (33) erstreckende Zwischenplatte (40), die einen unteren, zwischen dem Unterteil (32) und der Zwischenplatte (40) befindlichen Haltebereich und einen oberen, zwischen dem Oberteil (33) und der Zwischenplatte (40) befindlichen Haltebereich voneinander trennt.

12. Klemme nach Anspruch 11, **dadurch gekennzeichnet, daß** die Zwischenplatte (40) eine Öffnung (41) aufweist, die mit der Öffnung (42) in dem Oberteil (33) fluchtet und daß das an dem Deckel (34) angeordnete Druckelement (43) durch die Öffnung (42) im Oberteil (33) hindurchragt und in die Öffnung (41) in der Zwischenplatte (40) eindringt.

13. Klemme nach Anspruch 12, **dadurch gekennzeichnet, daß** das Druckelement (43) einen die Öffnung (41) in der Zwischenplatte (40) durchdringenden Abschnitt (45) aufweist, der bei geschlossenem Deckel (34) an dem Boden des Unterteils (32) anliegt.

14. Klemme nach einem der Ansprüche 12 oder 13, **dadurch gekennzeichnet, daß** das Druckelement (43) einen Abschnitt (44) aufweist, der bei geschlossenem Deckel (34) auf der Zwischenplatte (40) aufliegt.

15. Klemme nach einem der Ansprüche 12 bis 14, **dadurch gekennzeichnet, daß** das Druckelement (43) aus einem bogenförmigen, einstückig mit dem Deckel (34) ausgebildeten Materialstreifen besteht.

16. Klemme nach einem der Ansprüche 12 bis 14, **dadurch gekennzeichnet, daß** das Druckelement (43) aus einem materialschlüssig mit dem Deckel (34) verbundenen Körper aus elastomerem Werkstoff besteht.

## Claims

1. Clamp for holding of flat objects, such as films, flat ribbon cables or the like, which clamp is provided with an underpart (2, 32) comprising a floor and stops (6, 7, 36, 37) arranged at a distance from each other and from the floor, laterally bounding a holding region, and with a top part (3, 33) attached to the underpart opposed to the floor, an entry opening (14) being provided between the top part and the stop (6, 36) arranged on one side of the holding region, the said entry opening being closable by a lid (4, 34) reaching over the top part (3, 33) **characterized in that** the lid (4, 34) is connectable to the underpart (2, 32) by means of a closure and comprises a pressure element (18, 43) which, when the lid is closed, generates a clamping force directed towards the floor of the underpart (2) and that an opening is provided in the top part (3, 33), through which the pressure element (18, 43) extends when the lid (4, 34) is closed in the direction of the floor of the underpart (2, 32).

2. Clamp according to claim 2, **characterized in that** the pressure element (18) consists of an elastically deformable finger attached to the inner side of the lid (4).

3. Clamp according to any of the preceding claims, **characterized by** a spring contact pressure element (16) extending into the holding region between the floor of the underpart (2) and the top part (3).

4. Clamp according to claim 3, **characterized in that** the contact pressure element (16) is attached to the top part (3).

5. Clamp according to either of claims 3 or 4, **characterized in that** the contact pressure element (16) comprises a guide surface by which the objects are guided in the holding region when brought into the clamp.

6. Clamp according to any of the preceding claims, **characterized in that** the pressure element (18) acts on the contact pressure element (16) when the lid (4) is closed.

7. Clamp according to any of the preceding claims, **characterized in that** a fastening element (5, 35) is attached to the underpart (2, 32).

8. Clamp according to any of the preceding claims, **characterized in that** the lid (4, 34) is connected to the underpart (2, 32) by a flexure hinge (11, 39).

9. Clamp according to any of the preceding claims, **characterized in that** to hold the lid (4, 34) in the closed position, a snap closure is provided with a catch hook (20, 46) attached to the lid, snapping into a recess (8, 47) in the underpart (2, 32).

10. Clamp according to any of the preceding claims, **characterized by** being made in one piece out of a synthetic material.

11. Clamp according to any of claims 1 or 7 to 10, **characterized by** an interplate (40) extending between the underpart (32) and the top part (33) and separating from each other a lower holding region located between the underpart (32) and the interplate (40) and an upper holding region located between the top part (33) and the interplate (40).

12. Clamp according to claim 11, **characterized in that** the interplate (40) comprises an opening (41) aligned with the opening (42) in the top part (33) and **in that** the pressure element (43) arranged on the lid (34) protrudes through the opening (42) in the top part (33) and enters the opening (41) in the interplate (40).

13. Clamp according to claim 12, **characterized in that** the pressure element (43) comprises a segment (45) passing through the opening (41) in the interplate (40) and resting on the floor of the underpart (32) when the lid (34) is closed.

14. Clamp according to either of claims 12 or 13, **characterized in that** the pressure element (43) comprises a segment (44) resting on the interplate (40) when the lid (34) is closed.

15. Clamp according to any of claims 12 to 14, **characterized in that** the pressure element (43) consists of an arcuate strip of material configured in one piece with the lid (34).

16. Clamp according to any of claims 12 to 14, **characterized in that** the pressure element (43) consists of a body of elastomer material positively connected materially to the lid (34).

## Revendications

1. Pince pour tenir des objets plats, tels que feuilles, rubans conducteurs ou similaires, pourvue d'une partie inférieure (2, 32) qui comporte un fond et des butées (6, 7, 36, 37) écartées les unes des autres et faisant saillie du fond, lesquelles délimitent latéralement une zone de maintien, ainsi que d'une partie supérieure (3, 33) opposée au fond et placée sur la partie inférieure, une ouverture d'introduction (14) étant prévue entre la partie supérieure et la butée (6, 36) disposée sur une face de la zone de maintien, l'ouverture d'introduction pouvant être fermée par un couvercle (4, 34) passant en position de fermeture sur la partie supérieure (3, 33), **caractérisée en ce que** le couvercle (4, 34) peut être relié à la partie inférieure (2, 32) par une fermeture et comporte un élément de pression (18, 43) qui, lorsque le couvercle est fermé, produit une force de serrage dirigée vers le fond de la partie inférieure (2), et **en ce que** dans la partie supérieure (3, 33) est prévue une ouverture (17, 41) à travers laquelle l'élément de pression (18, 43) s'étend en direction du fond de la partie inférieure (2, 32), lorsque le couvercle (4, 34) est fermé.

2. Pince selon la revendication 1, **caractérisée en ce que** l'élément de pression (18) est constitué d'un doigt déformable élastiquement, placé sur la face intérieure du couvercle (4).

3. Pince selon l'une quelconque des revendications précédentes, **caractérisée par** un élément de pressage (16) élastique, s'étendant dans la zone de maintien entre le fond de la partie inférieure (2) et la partie supérieure (3).

4. Pince selon la revendication 3, **caractérisée en ce que** l'élément de pressage (16) est placé sur la partie supérieure (3).

5. Pince selon l'une quelconque des revendications 3 ou 4, **caractérisée en ce que** l'élément de pressage (16) présente une surface de guidage par laquelle les objets sont guidés dans la zone de maintien, lors de l'introduction dans la pince.

6. Pince selon l'une quelconque des revendications précédentes, **caractérisée en ce que** l'élément de pression (18) agit sur l'élément de pressage (16) lorsque le couvercle (4) est fermé.

7. Pince selon l'une quelconque des revendications précédentes, **caractérisée en ce qu'**un élément de fixation (5, 35) est placé sur la partie inférieure (2, 32).

8. Pince selon l'une quelconque des revendications précédentes, **caractérisée en ce que** le couvercle (4, 34) est relié à la partie inférieure (2, 32) par une charnière à flexion (11, 39).

9. Pince selon l'une quelconque des revendications précédentes, **caractérisée en ce que** pour maintenir le couvercle (4, 34) en position de fermeture, il est prévu une fermeture à clipsage avec un crochet d'encliquetage (20, 46) placé sur le couvercle, qui se clipse dans un évidement (8, 47) de la partie inférieure (2, 32).

10. Pince selon l'une quelconque des revendications précédentes, **caractérisée en ce qu'**elle est fabriquée d'une seule pièce dans un matériau plastique.

11. Pince selon l'une quelconque des revendications 1 ou 7 à 10, **caractérisée par** une plaque intermédiaire (40), s'étendant entre la partie inférieure (32) et la partie supérieure (33), qui sépare une zone de maintien inférieure, se trouvant entre la partie inférieure (32) et la plaque intermédiaire (40), d'une zone de maintien supérieure se trouvant entre la partie supérieure (33) et la plaque intermédiaire (40).

12. Pince selon la revendication 11, **caractérisée en ce que** la plaque intermédiaire (40) présente une ouverture (41) qui est alignée avec l'ouverture (42) de la partie supérieure (33), et **en ce que** l'élément de pression (43), disposé sur le couvercle (34), s'étend à travers l'ouverture (42) de la partie supérieure (33) et pénètre à l'intérieur de l'ouverture (41) de la plaque intermédiaire (40).

13. Pince selon la revendication 12, **caractérisée en ce que** l'élément de pression (43) comporte un segment (45) traversant l'ouverture (41) de la plaque intermédiaire (40), qui s'applique contre le fond de la partie inférieure (32), lorsque le couvercle (34) est fermé.

14. Pince selon l'une quelconque des revendications 12 ou 13, **caractérisée en ce que** l'élément de pression (43) comporte un segment (44) qui repose sur la plaque intermédiaire (40), lorsque le couvercle (34) est fermé.

15. Pince selon l'une quelconque des revendications 12 à 14, **caractérisée en ce que** l'élément de pression (43) est constitué d'une bande de matériau en forme d'arc, réalisée d'un seul tenant avec le couvercle (34).

16. Pince selon l'une quelconque des revendications 12 à 14, **caractérisée en ce que** l'élément de pression (43) est constitué d'un corps en un matériau élastomère, relié par adhérence de matière au couvercle (34).
